# EUROPEAN PATENT APPLICATION

(11) **EP 4 553 008 A1**
(43) Date of publication of application: **14.05.2025**
(21) Application number: 23209262.7
(22) Date of filing: 10.11.2023
(51) Int. Cl.: B65G 1/04, B60B 21/10

(54) **A WHEEL ASSEMBLY FOR A CONTAINER HANDLING VEHICLE**

(71) Applicant: AUTOSTORE TECHNOLOGY AS, 5578 Nedre Vats (NO)
(72) Inventor: PLØEN, Christian Håkan, Nedre Vats (NO)
(74) Representative: Jarrett, Daniel Phillip

(57) **Abstract**

A wheel assembly for a container handling vehicle includes an outer wheel element (50) configured to be received in a track recess, and a pulley (34) for a drive belt (11) wherein the wheel assembly (30) has a width (W2) in an axial direction being equal to or smaller than the width (W3) of the track (17) of the track recess.

## Description

### FIELD OF THE INVENTION

The present invention relates to a wheel assembly for a storage system for storage containers.

### BACKGROUND AND PRIOR ART

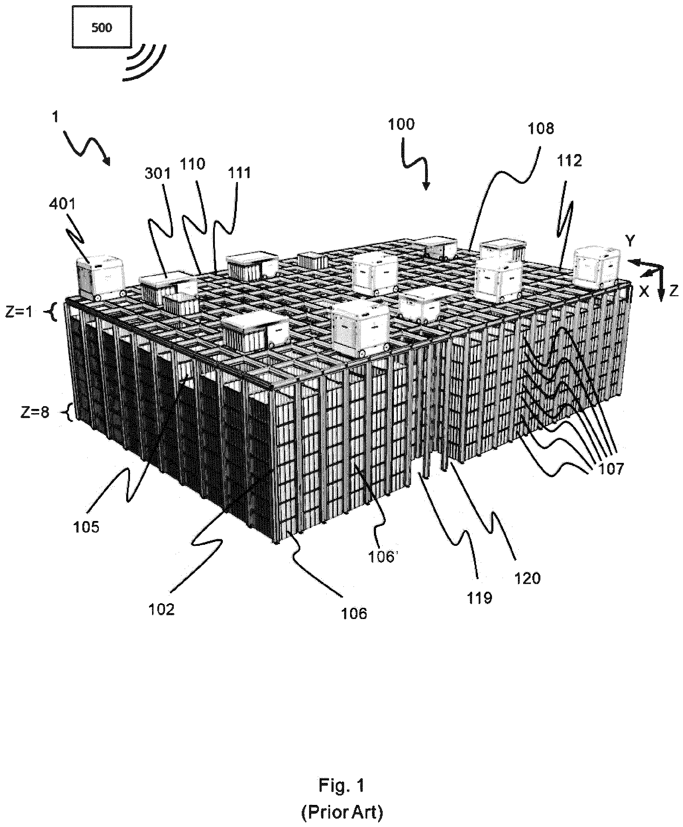

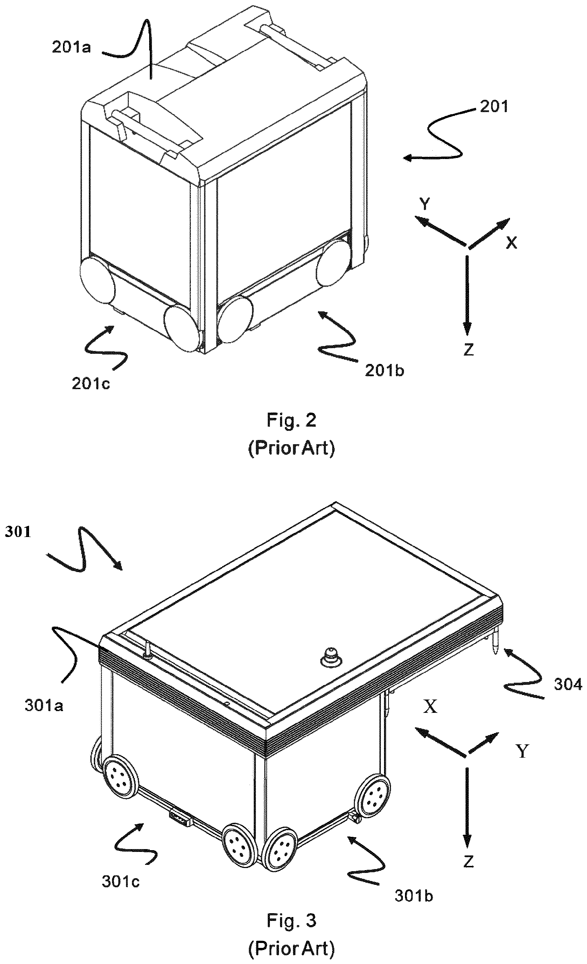

Fig. 1 discloses a prior art automated storage and retrieval system 1 (i.e. a storage system), with a framework structure 100 and Figs. 2, 3 and 4 disclose three different prior art container handling vehicles 201,301,401 suitable for operating on such a system 1.

The framework structure 100 comprises upright members 102 and a storage volume comprising storage columns 105 arranged in rows between the upright members 102. In these storage columns 105 storage containers 106, also known as bins, are stacked one on top of one another to form stacks 107. The members 102 may typically be made of metal, e.g. extruded aluminium profiles.

The framework structure 100 of the automated storage and retrieval system 1 comprises a rail system 108 (i.e. a rail grid) arranged across the top of framework structure 100, on which rail system 108 a plurality of container handling vehicles 201,301,401 may be operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 201,301,401 in a first direction X across the top of the frame structure 100, and a second set of parallel rails 111 arranged perpendicular to the first set of rails 110 to guide movement of the container handling vehicles 201,301,401 in a second direction *Y* which is perpendicular to the first direction X. Containers 106 stored in the columns 105 are accessed by the container handling vehicles 201,301,401 through access openings 112 in the rail system 108. The container handling vehicles 201,301,401 can move laterally above the storage columns 105, i.e. in a plane which is parallel to the horizontal *X-Y* plane.

The upright members 102 of the framework structure 100 may be used to guide the storage containers during raising of the containers out from and lowering of the containers into the columns 105. The stacks 107 of containers 106 are typically self-supportive.

Each prior art container handling vehicle 201,301,401 comprises a vehicle body 201a,301a,401a and a wheel assembly featuring first and second sets of wheels 201b,201c,301b,301c,401b,401c which enable the lateral movement of the container handling vehicles 201,301,401 in the X direction and in the Y direction, respectively. In Figs. 2, 3 and 4 two wheels in each set are fully visible. The first set of wheels 201b,301b,401b is arranged to engage with two adjacent rails of the first set 110 of rails, and the second set of wheels 201c,301c,401c is arranged to engage with two adjacent rails of the second set 111 of rails. At least one of the sets of wheels 201b,301b,201c,301c,401b,401c can be lifted and lowered, so that the first set of wheels 201b,301b,401b and/or the second set of wheels 201c,301c,401c can be engaged with the respective set of rails 110, 111 at any one time.

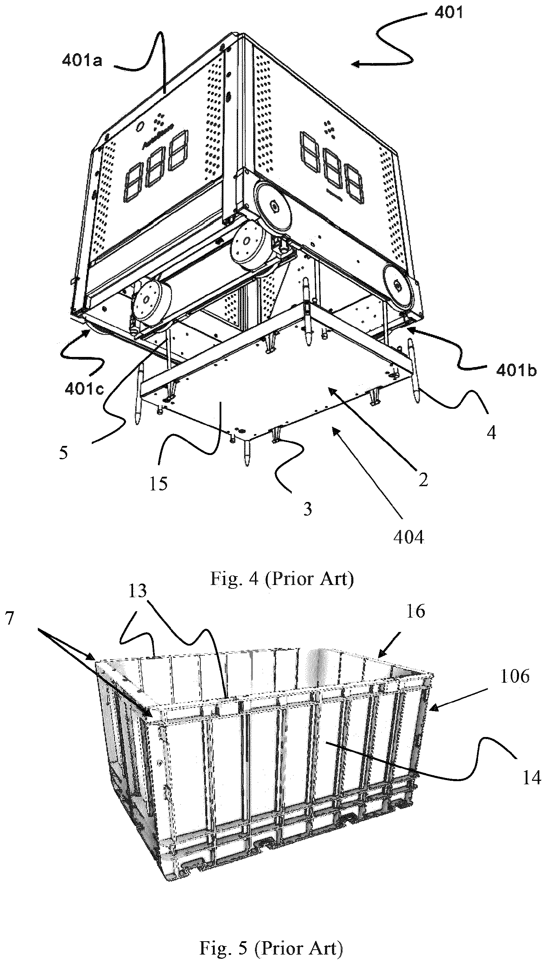

Each prior art container handling vehicle 201,301,401 also comprises a lift device 404, see fig. 4, for vertical transportation of storage containers 106 (i.e. a container lift device), e.g. raising a storage container 106 from, and lowering a storage container 106 into, a storage column 105. The lift device 404 features a lifting frame 2 comprising container connectors 3, adapted to engage connecting recesses 13 at an upper rim of the sidewalls 14 of a storage container 106, see fig. 5, and guiding pins 4. The guiding pins 4 are arranged to interact with guiding pin recesses 7 at the corners of the storage container and ensure a correct alignment of the lifting frame 2 and container connectors 3 relative to the storage container. The guiding pins 4 will also assist in guiding the lifting frame 2 relative to the upright members of the storage column 105. The lifting frame 2 can be lowered from the vehicle 201,301,401 so that the position of the lifting frame 2 with respect to the vehicle 201,301,401 can be adjusted in a third direction *Z* which is orthogonal the first direction *X* and the second direction Y. The lifting device of the container handling vehicle 201 is located within the vehicle body 201a in Fig. 2.

To raise or lower the lifting frame 2 (and optionally a connected storage container 106), the lifting frame 2 is suspended from a band drive assembly by lifting bands 5. In the band drive assembly, the lifting bands are commonly spooled on/off at least one rotating lifting shaft or reel arranged in the container handling vehicle. Various designs of band drive assemblies are described in for instance WO 2015/193278 A1, WO 2017/129384 A1 and WO 2019/206438 A1.

Conventionally, and also for the purpose of this application, *Z*=1 identifies the uppermost layer for storing storage containers below the rail system 108, i.e. the layer immediately below the rail system 108, *Z*=2 the second layer below the rail system 108, *Z*=3 the third layer etc. In the exemplary prior art disclosed in Fig. 1, *Z*=8 identifies the lowermost, bottom layer of storage containers. Similarly, *X*=1...*n* and *Y*=1...*n* identifies the position of each storage column 105 in the horizontal plane. Consequently, as an example, and using the Cartesian coordinate system *X, Y, Z* indicated in Fig. 1, the storage container identified as 106' in Fig. 1 can be said to occupy storage position *X*=17, *Y*=1, *Z*=6. The container handling vehicles 201,301,401 can be said to travel in layer *Z*=0, and each storage column 105 can be identified by its *X* and *Y* coordinates. Thus, the storage containers shown in Fig. 1 extending above the rail system 108 are also said to be arranged in layer *Z*=0.

The storage volume of the framework structure 100 has often been referred to as a grid 104, where the possible storage positions within this grid are referred to as storage cells. Each storage column may be identified by a position in an *X*- and *Y*-direction, while each storage cell may be identified by a container number in the *X-, Y-* and *Z*-direction.

Each prior art container handling vehicle 201,301,401 comprises a storage compartment or space for receiving and stowing a storage container 106 when transporting the storage container 106 across the rail system 108. The storage space may comprise a cavity arranged internally within the vehicle body 201a as shown in Figs. 2 and 4 and as described in e.g. WO2O15/193278A1 and WO2019/206487A1, the contents of which are incorporated herein by reference.

Fig. 3 shows an alternative configuration of a container handling vehicle 301 with a cantilever construction. Such a vehicle is described in detail in e.g. NO317366, the contents of which are also incorporated herein by reference.

The cavity container handling vehicles 201 shown in Fig. 2 may have a footprint that covers an area with dimensions in the X and Y directions which is generally equal to the lateral extent of a storage column 105, e.g. as is described in WO2015/193278A1, the contents of which are incorporated herein by reference. The term 'lateral' used herein may mean 'horizontal'.

Alternatively, the cavity container handling vehicles 401 may have a footprint which is larger than the lateral area defined by a storage column 105 as shown in Fig. 1 and 4, e.g. as is disclosed in WO2014/090684A1 or WO2019/206487A1.

The rail system 108 typically comprises rails with grooves/tracks in which the wheels of the vehicles run. Each rail may comprise one track, or each rail may comprise two parallel tracks, i.e. a double-track rail.

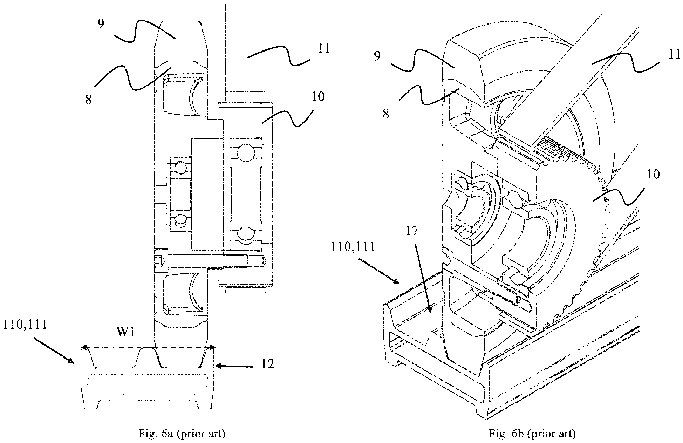

A double-track rail 110,111 and a wheel assembly used in the prior art container handling vehicle shown in Fig. 3 are shown in figs. 6a/6b. The wheel assembly comprises a wheel rim 8, a tyre 9 moulded onto the wheel rim 8 and a pulley 10 for a drive belt 11.

WO2018/146304A1, the contents of which are incorporated herein by reference, illustrates a typical configuration of rail system 108 comprising rails and parallel tracks in both *X* and *Y* directions forming a rail grid.

In the framework structure 100, most of the columns 105 are storage columns 105, i.e. columns 105 where storage containers 106 are stored in stacks 107. However, some columns 105 may have other purposes. In Fig. 1, columns 119 and 120 are such special-purpose columns used by the container handling vehicles 201,301,401 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a `port column' 119,120. The transportation to the access station may be in any direction, that is horizontal, tilted and/or vertical. For example, the storage containers 106 may be placed in a random or dedicated column 105 within the framework structure 100, then picked up by any container handling vehicle and transported to a port column 119,120 for further transportation to an access station. Note that the term 'tilted' means transportation of storage containers 106 having a general transportation orientation somewhere between horizontal and vertical.

In Fig. 1, the first port column 119 may for example be a dedicated drop-off port column where the container handling vehicles 201,301,401 can drop off storage containers 106 to be transported to an access or a transfer station, and the second port column 120 may be a dedicated pick-up port column where the container handling vehicles 201,301,401 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1 but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station.

The conveyor system may be arranged to transfer storage containers 106 between different framework structures, e.g. as is described in WO2014/075937A1, the contents of which are incorporated herein by reference. The conveyor system in WO2014/075937A1 is a storage container lift arranged to transport a storage container between two vertically separated framework structures 100. A potential disadvantage of the storage container lift is that it is a potential single point of failure and repair of a defective storage container lift may be time-consuming.

When a storage container 106 stored in one of the storage columns 105 disclosed in Fig. 1 is to be accessed, one of the container handling vehicles 201,301,401 is instructed to retrieve the target storage container 106 from its position and transport it to the drop-off port column 119. This operation involves moving the container handling vehicle 201,301,401 to a location above the storage column 105 in which the target storage container 106 is positioned, retrieving the storage container 106 from the storage column 105 using the container handling vehicle's 201,301,401 lifting device 404, and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201,301,401 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201,301,401 is instructed to pick up the storage container 106 from the pick-up port column 120 and transport it to a location above the storage column 105 where it is to be stored. After any storage containers 106 positioned at or above the target position within the stack 107 have been removed, the container handling vehicle 201,301,401 positions the storage container 106 at the desired position. The removed storage containers 106 may then be lowered back into the storage column 105 or relocated to other storage columns 105.

For monitoring and controlling the storage system 1, e.g. monitoring and controlling the location of respective storage containers 106 within the framework structure 100, the content of each storage container 106, and the movement of the container handling vehicles 201,301,401 so that a desired storage container 106 can be delivered to the desired location at the desired time without the container handling vehicles 201,301,401 colliding with each other, the storage 1 comprises a control system 500 which typically is computerized and which typically comprises a database for keeping track of the storage containers 106.

### SUMMARY OF THE INVENTION

The present invention is defined by the attached claims and in the following:
In a first aspect, the present invention provides a storage system for storage containers, the storage system comprising a framework structure and a container handling vehicle, wherein the framework structure comprises a rail grid having a first set of parallel rails and a second set of parallel rails arranged perpendicular to the first set of rails, wherein the container handling vehicle comprises two sets of wheels by which the container handling vehicle may move in two perpendicular directions upon the rail grid, at least one of the wheels being formed by a wheel assembly, wherein the wheel assembly comprises an outer wheel element and a pulley for a drive belt, wherein each rail of the first set of rails has two sidewalls, outer edges of which defining a width of the rail, and comprises two parallel tracks, each track being for guiding a wheel of the set of wheels, and wherein the wheel assembly has a width in an axial direction being equal to or smaller than the width of a track of the rail.

This setup allows to position the drive belt external to the vehicle body of the container handling vehicle. The installation space inside the vehicle body may thus be increased and components may be repositioned, which may improve the dynamic characteristics of the vehicle, such as the location of the center of gravity. In addition, the rolling mass can be reduced. Servicing and/or replacing the drive belt is simplified with an external belt, as side walls or other components of the vehicle do not need to be removed to gain access to the drive belt.

Each track may be defined by two opposed track walls, which are arranged to define a path for a wheel of a vehicle running along the track, and a maximum track width of the track, which is the largest gap width between the track walls, wherein the outer wheel element of the wheel assembly may have a width being equal to or smaller than half the maximum track width of the track. Thus, the outer wheel element may have a width that is about half the width of a common wheel of a storage container handling vehicle. The remaining part of the axial dimension of the wheel assembly can be used for the pulley.

The outer wheel element of the wheel assembly may comprise an inclined side portion for guidance by a respective inclined portion of one of the track walls. Hence, a radial outer portion of the outer wheel element is chamfered, wherein the chamfer cooperates with the inclined portion of the track wall to guide the outer wheel element. This helps to provide a self-steer function for the outer wheel element. It is to be understood that a wheel or an outer wheel element on an opposed side of the vehicle may have the same inclined portion or chamfer, but in a mirror-inverted manner. Opposed wheels may thus act as a pair with either their outer edges or inner edges being guided by the track walls on opposed sides of the vehicle.

In an embodiment, the wheel assembly does not extend in an axial direction beyond sidewalls of the rail. Thus, the wheel assembly does not cross or intersect a vertical projection of any of two opposite sidewall of the rail, i.e. the wheel assembly does not extend beyond vertical planes arranged at opposite sides of the rail.

The rail grid may define a plurality of access openings, and the wheel assembly does not extend over an inner periphery of any of the access openings when the container handling vehicle operates on the rail grid. The wheel assembly thus does not overhang the access opening, when the container handling vehicle is situated on a grid space adjacent the access opening. The term "inner" in this context refers to a horizontally inner periphery, i.e. in a lateral direction or an axial direction viewed from the axial extension of the wheel assembly.

The outer wheel element of the wheel assembly may comprise a wheel rim and a tyre arranged or moulded on the wheel rim.

The wheel rim and the pulley may be portions of a single wheel component. Thus, the wheel rim and the pulley may be integrally manufactured.

However, the pulley may - as an alternative thereto - have teeth or ribs that extend in an axial direction and are configured to partially engage with complementary grooves in an inner circumference of a wheel ring that forms the wheel rim, wherein the pulley may have a width that corresponds to the width of the wheel assembly, and wherein the wheel ring has a width that corresponds to the width of the outer wheel element. The outer wheel element is thus mounted on the teeth of the pulley, while the axial portion of the pulley that does not engage with the wheel ring acts to engage with the belt. The term "pulley" in this regard thus refers to a component that has a double function of transferring torque to the outer wheel component and to the belt. These two portions of the pulley form a single, co-axial component, with teeth that can serve two purposes, i.e. engaging the belt and engaging the tyre.

The wheel assembly may be mounted on a wheel hub of the container handling vehicle via a pair of bearings.

The container handling vehicle may comprise a drive belt for rotating the pulley, the drive belt being arranged within the width of the wheel assembly.

In an embodiment of the storage system, the container handling vehicle may comprise a wheel assembly featuring first and second sets of wheels which enable movement of the container handling vehicle in the two perpendicular directions on the rail system. The first set of wheels may be arranged to engage with a first set of parallel rails of the rail system, and the second set of wheels may be arranged to engage with a second set of parallel rails of the rail system. At least one of the sets of wheels can be lifted and lowered relative to the other set of wheels, so that the first set of wheels and/or the second set of wheels can be engaged with the respective set of rails at any one time.

The container handling vehicle may comprise a first set of wheels and a second set of wheels, wherein at least one of the sets of wheels can be lifted and lowered relative to the other set of wheels, so that the first set of wheels and the second set of wheels can be engaged with a respective set of rails, and wherein at least one of the sets of wheels comprises four wheel assemblies, two wheel assemblies arranged on each of two opposite sides of the vehicle.

The pulleys of two wheel assemblies arranged on a common side of the vehicle may be interconnected by a single belt. This may be the belt that drives the pulleys. The belt may at least partially be wound around a drive pulley connected to a motor. The motor may be arranged inside the vehicle body, while the drive pulley may preferably be arranged on an exterior side of the vehicle body.

In an embodiment, each wheel may be formed by a wheel assembly.

The pulley of the wheel assembly may be arranged axially further inwards than the outer wheel element. Thus, the pulley and, consequently, the belt are arranged between the outer wheel element and the vehicle body. Thereby, the belt is protected and the distance between two wheels on a common axle can be increased, which improves the dynamic characteristics of the vehicle.

However, as an alternative, the pulley of the wheel assembly may be arranged further outwards than the outer wheel element. Thereby, the accessibility of the belt can be improved.

The framework structure of the storage system may define a plurality of storage columns in which storage containers are arranged one on top of another in vertical stacks.

The rail system upon which the container handling vehicle may move in two perpendicular directions is arranged above the storage columns.

The rail system may be arranged on top of, and supported by, vertical column profiles defining the storage columns. The rail system may comprise a first set of parallel rails arranged to guide movement of the container handling vehicle in a first direction across the top of the framework structure, and a second set of parallel rails arranged perpendicular to the first set of rails to guide movement of the container handling vehicle in a second direction being perpendicular to the first direction.

The container handling vehicle may comprise a vertically moveable lifting frame for lifting a storage container from the storage columns.

In an embodiment of the storage system, the lifting frame may be configured to releasably connect to an upper portion of a storage container. The lifting frame may comprise grippers configured to releasably connect to connector recesses arranged in an upper rim of the storage container.

In a second aspect, the present invention provides a container handling device, wherein the container handling vehicle comprises two sets of wheels by which the container handling vehicle may move in two perpendicular directions upon the rail grid of the storage system, at least one of the wheels being formed by a wheel assembly, wherein the wheel assembly comprises an outer wheel element and a pulley for a drive belt, wherein the wheel assembly has a width in an axial direction being equal to or smaller than the width of a track of a of the rail grid, and wherein the wheel assembly is arranged at an exterior side of a vehicle body.

It is referred to the above-mentioned embodiments of the storage system, in which several features of this container handling vehicle are already mentioned and explained, which features also relate to the container handling vehicle alone.

### BRIEF DESCRIPTION OF THE DRAWINGS

Embodiments of the invention is described in detail by reference to the following drawings:
Fig. 1 is a perspective view of a framework structure of a prior art automated storage and retrieval system.
Fig. 2 is a perspective view of a prior art container handling vehicle having a centrally arranged cavity for carrying storage containers therein.
Fig. 3 is a perspective view of a prior art container handling vehicle having a cantilevered section for carrying storage containers underneath.
Fig. 4 is a perspective view of a prior art container handling vehicle, wherein a container lifting assembly is shown.
Fig. 5 is a perspective view of a storage container as used in the storage system in fig. 1.
Figs. 6a and 6b show a prior art wheel assembly.
Figs. 7a and 7b show sectional drawings of a wheel assembly according to the invention.
Fig. 8 shows an exploded view of the wheel assembly according to the invention.
Fig. 9 shows the components of the wheel assembly according to the invention and a double-track rail in a two-dimensional view.
Fig. 10 shows the wheel assembly according to the invention in a perspective view onto the pulley and the belt.
Fig. 11 shows a load handling vehicle in a perspective view and a detail in a lateral view.
Fig. 12 shows a load handling vehicle in a perspective view and a detail in a lateral view.

### DETAILED DESCRIPTION OF THE INVENTION

In overview, a wheel assembly for a container handling vehicle includes an outer wheel element (50) configured to be received in a track recess, and a pulley (34) for a drive belt (11) wherein the wheel assembly (30) has a width (W2) in an axial direction being equal to or smaller than the width (W3) of the track (17) of the track recess. This provides an improved wheel assembly for container handling vehicles operated on a rail grid in a storage system. In particular, the drive belt can be positioned externally to the container vehicle by virtue of the slimmed profile providing additional flexibility in positioning other components.

In the following, embodiments of the invention will be discussed in more detail with reference to the appended drawings. The drawings are not intended to limit the invention to the illustrated subject-matter.

As discussed above, a prior art wheel assembly is illustrated in figs. 6a and 6b. The wheel assembly is arranged on one track of a double-track rail 110, 111 having two parallel tracks 17. The wheel assembly comprises a wheel rim 8, onto which a tyre 9 is moulded. The tyre 9 is in contact with one of the tracks 17. At a side of the wheel rim 8 facing away from the rail 110, 111, a pulley 10 is arranged and connected to the wheel rim 8. The wheel rim 8 and the pulley 10 are concentrical and the pulley 10 is capable of transferring a rotation to the wheel rim 8.

The pulley 10 has a series of teeth or ribs, which engage correspondingly shaped teeth or grooves of a drive belt 11. A width of the wheel arrangement, i.e. the overall axial dimension of the combination of wheel rim 8 and pulley 10, may be substantially equal to or exceed the width W1 of the rail 110, 111. The pulley 10 may be arranged at an interior side of the vehicle body 6, while the wheel rim 8 may be arranged on an exterior side of the vehicle body 6. A plane of a sidewall of the vehicle body 6 may thus run between the driven wheel rim 8 and the pulley 10.

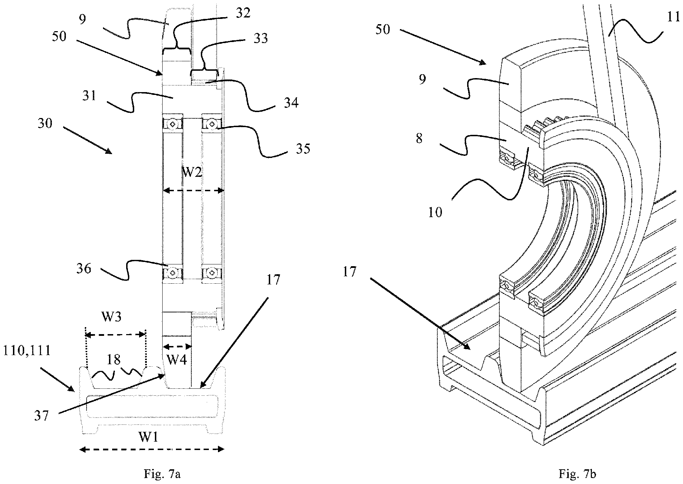

A container handling vehicle for a storage system for storage containers is illustrated in figs. 7-12.

As illustrated in Figs. 7a and 7b, a wheel assembly 30 has a wheel rim 31 having a first axial section 32 and a second axial section 33, which directly follow on each other that is to say, are adjacent in the axial direction and coaxial. The first axial section 32 has a slightly larger outer diameter than the second axial section 33. A tyre 9 is moulded onto the first axial section 31 of the wheel rim 31. Together, the first axial section 32 and the tyre 9 form an outer wheel element 50.

A pulley 34 is formed on the second axial section 33. The wheel assembly 30 has a width W2 in an axial direction, which is equal to or smaller than half the width W1 of the rail 110, 111.

The wheel rim 31 holds two ball bearings 35 and 36, or ball bearing races, which are spaced apart in an axial direction and do not protrude over the wheel rim 31. The pulley 34 is in contact with a drive belt 11. When driving the drive belt 11, the wheel rim 31 is driven to move the vehicle along the respective track 17 of the rail 110, 111.

The first axial section 32 and the second axial section 33 may be formed in the wheel rim 31 that may be formed as a single component. However, these two sections 32 and 33 may be formed in separate components that are joined together to form at least a part of the wheel rim 31.

Thus, the wheel assembly 30 is a component that can be fitted onto an end of an axle in conjunction with ball bearings 35, 36 or the like for rolling along the track 17 of the rail 110, 111, wherein the wheel assembly 30 also has an integral pulley 34 for supplying the drive. A wheel portion, i.e. the first axial section 32, and a drive portion, i.e. the second axial section 33, may relate to different, non-overlapping bands of a rim surface.

The tyre 9, or the outer wheel element 50, has a width W4 that is equal to or smaller than half of the maximum track width W3. Hence, the pulley 34 may have a width that is at least half the maximum track width W3.

The tyre 9 has an inclined side portion 37 at an axial outer side of the wheel assembly 30, i.e. at a side of the tyre 9 facing away from the vehicle body, or at the left-hand side in Fig. 7a. The inclined side portion encloses an angle of roughly 10° with a vertical plane. The inclined side portion 37 will be guided by a complementary shaped inclined portion of a track wall 18 to follow the track 17. At an opposed side of the vehicle 30, the same wheel arrangement 30 is provided, but arranged in a mirror-inverted way. The tyre 9 of the opposite side preferably also has an inclined side portion 37 at a side of the tyre 9 facing away from the vehicle body and is guided by an inclined portion of a track wall 18 in the same way. The sides of the tyres 9 that face the vehicle body do not require an inclined portion any exemplarily end with a vertical extension and a rounded edge of a tread.

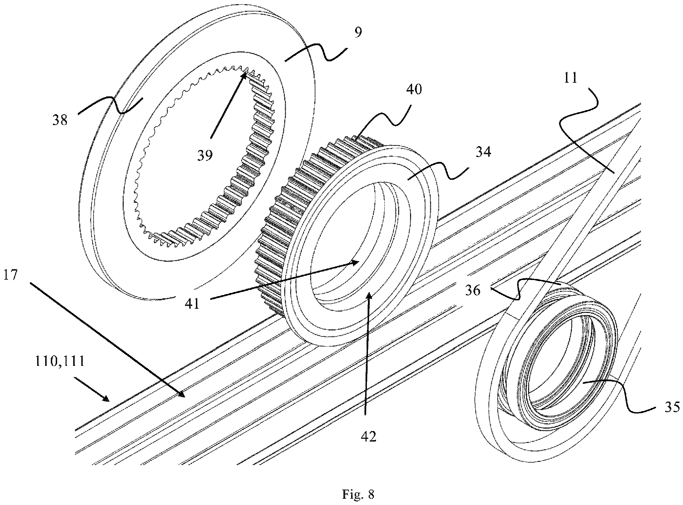

Fig. 8 shows the wheel arrangement 30 in a disassembled state. It is apparent that the first axial section 32 is formed by a wheel ring 38, onto which the tyre 9 is moulded. At a radial inner side, the wheel ring 38 has a plurality of grooves 39, that are complementary to teeth or ribs 40 of the pulley 34.

The pulley 34 axially extends over the width W2 and is configured to fit into the ring 38, where the teeth or ribs 40 mesh with the grooves 39. Due to the difference in the axial extensions of the pulley 34 and the wheel ring 38, half of the length of the teeth 40 remain outside of the wheel ring 38 and are accessible by the belt 11 from externally. Thus, the teeth or ribs 40 have a double function of engaging with the belt 11 and transferring a torque into the wheel ring 38 and, consequently, into the tyre 9. The manufacturing of the wheel assembly 30 may thus be simplified.

On the right-hand side of Fig. 8, the bearings 35 and 36 are shown, which can be placed into complimentary shaped recesses 41 and 42 of the pulley 34. An axle, which is not shown herein, can be inserted into the bearings 35 and 36 to support the wheel assembly 30 on the axle.

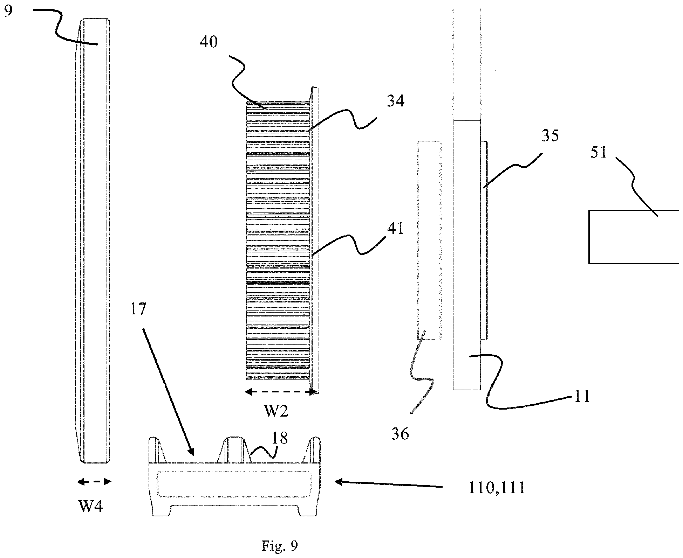

Fig. 9 shows a front view onto the individual components of the wheel assembly 30 as well as a double track rail 110, 111. It is apparent that the pulley 34 has the width W2, which is exemplarily double the width W4 of tyre 9. At the right-hand side of the pulley 34, a collar 41 extends in a radial direction from the pulley 34 to prevent the belt 11 from sliding off the pulley 34 during operation. On the right-hand side of Fig. 9, a simplified illustration of a wheel hub 51 is shown, onto which the bearings 35 and 36 may be arranged. In the context of the invention it is clear that the wheel hub 51 reaches from an interior side of the vehicle through a vehicle body to the exterior side of the vehicle to hold the bearings 35 and 36 to support the pulley 34 and the outer wheel element 50.

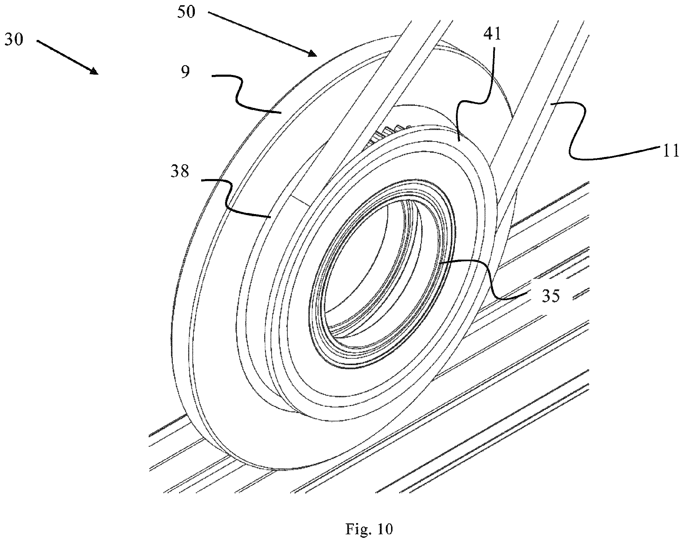

In Fig. 10, the belt 11 being arranged on the pulley 34 between the wheel ring 38 and the collar 41 is shown. It can be seen that both the wheel ring 38 and the collar 41 extend in a radial direction further than the belt 11. The belt 11 is thus reliably guided to remain in a channel, groove or trough formed by the collar 41 and the wheel ring 38.

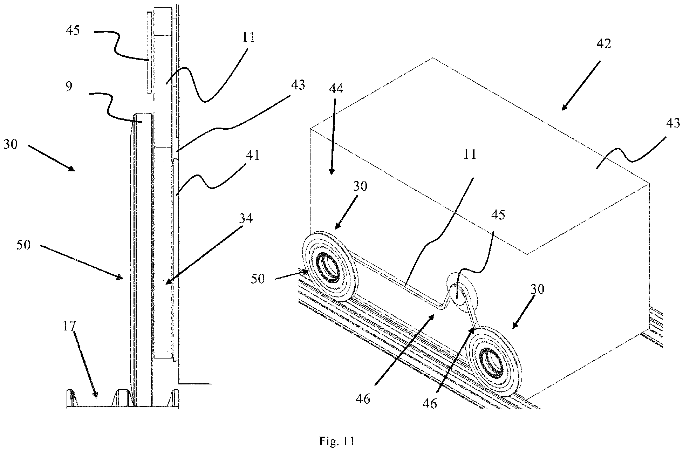

In Fig. 11, a container handling vehicle 42 is shown in a perspective view. Here, one lateral side 44 is visible, at which two wheel arrangements 30 are provided. Both wheel arrangements 30 are driven by one common belt 11, which in turn is driven by a drive pulley 45. The drive pulley 45 is driven by a motor inside the vehicle body 43 that is not shown in detail. The drive pulley 45 sticks out of the vehicle body 43 to the lateral side 44. The belt 11 is wound over both pulleys 34 of both wheel arrangements 30. The belt 11 is deflected at two deflection points 46, e.g. by rollers or pins, which are not shown in detail.

On the left-hand side of Figure 11, a front view of the wheel arrangements 30 and the drive pulley 45 is shown. The wheel arrangement 30 with the belt 11 wound over the pulley 34 is clearly narrower than in the prior art, such that the vehicle body 43 extends up to the rail 110, 111, thereby still allowing the belt 11 being arranged on an exterior side of the vehicle 42.

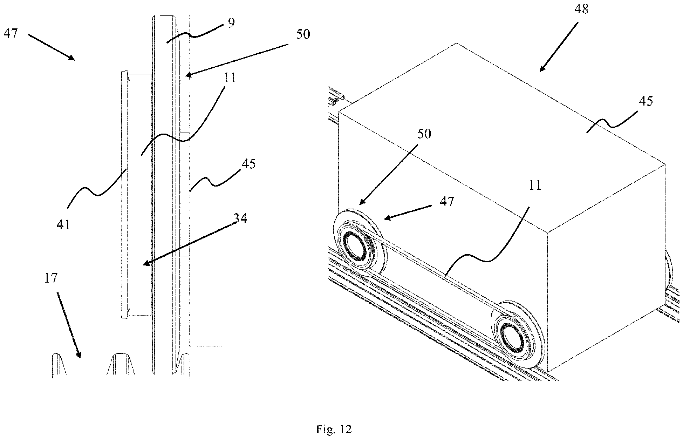

In Fig. 12, a vehicle 48 is shown, which comprises wheel assemblies 47. The wheel assemblies 47 differ from the previously shown wheel assemblies 30 in that the pulley 34 is arranged in an axially outer position and the outer wheel element 50 is arranged in an axially inner position. The individual elements may be identical with the elements of the wheel assemblies 30, but the wheel assemblies 47 are attached in a mirror-inverted way. This means that the tyre 9 has an inclined side portion 37, which is at an axially interior side of the outer wheel element 50. The vehicle 48 will thus be guided along tracks by inclined portions of the nearest track walls 18 of a pair of nearest tracks that extend along opposed sides of the vehicle 48.

The belt 11 that connects the wheel assemblies 47 thus runs exterior to the outer wheel elements 50, i.e. exterior to the tyres 9, which may further simplify the replacement or inspection of the belt 11.

Examples of the present disclosure are set out in the following numbered clauses.
1. A storage system (1) for storage containers (106), the storage system comprising a framework structure (100) and a container handling vehicle (42, 48),
   wherein the framework structure comprises a rail grid (108) having a first set of parallel rails (110) and a second set of parallel rails (111) arranged perpendicular to the first set of rails (110),
   wherein the container handling vehicle (42, 48) comprises two sets of wheels (30) by which the container handling vehicle (42, 48) may move in two perpendicular directions upon the rail grid (108), at least one of the wheels (30) being formed by a wheel assembly (30),
   wherein the wheel assembly (30) comprises an outer wheel element (50) and a pulley (34) for a drive belt (11),
   wherein each rail (110,111) of the first set of rails has two sidewalls (12), outer edges of which defining a width (W1) of the rail, and comprises two parallel tracks (17), each track being for guiding a wheel (30) of the set of wheels (30), and
   wherein the wheel assembly (30) has a width (W2) in an axial direction being equal to or smaller than the width (W3) of a track (17) of the rail (110, 111).
2. The storage system according to clause 1,
   wherein each track (17) is defined by two opposed track walls (18), which are arranged to define a path for a wheel (30) of a vehicle (42, 48) running along the track, and a maximum track width (W3) of the track, which is the largest gap width between the track walls (18), and
   wherein the outer wheel element (50) of the wheel assembly (30) has a width (W4) being equal to or smaller than half the maximum track width (W3) of the track (17).
3. The storage system (1) according to clause 2, wherein the outer wheel element (50) of the wheel assembly (30) comprises an inclined side portion (37) for guidance by a respective inclined portion of one of the track walls (18).
4. The storage system (1) according to any of the preceding clauses, wherein the wheel assembly (30) does not extend in an axial direction beyond sidewalls (12) of the rail (110, 111).
5. The storage system (1) according to any of the preceding clauses, wherein the rail grid (108) defines a plurality of access openings (112), and the wheel assembly (30) does not extend over an inner periphery of any of the access openings (112) when the container handling vehicle (42, 48) operates on the rail grid (108).
6. The storage system (1) according to any of the preceding clauses, wherein the outer wheel element (50) of the wheel assembly (30) comprises a wheel rim (8) and a tyre (9) arranged or moulded on the wheel rim (8).
7. The storage system (1) according to clause 6,
   wherein the wheel rim (8) and the pulley (10) are portions of a single wheel component.
8. The storage system (1) according to clause 6,
   wherein the pulley (34) has teeth or ribs (40) that extend in an axial direction and are configured to partially engage with complementary grooves (39) in an inner circumference of a wheel ring (38) that forms the wheel rim (31),
   wherein the pulley (34) has a width that corresponds to the width (W2) of the wheel assembly (30), and
   wherein the wheel ring (38) has a width that corresponds to the width (W4) of the outer wheel element (50).
9. The storage system (1) according to any of the preceding clauses,
   wherein the wheel assembly (30) is mounted on a wheel hub (51) of the container handling vehicle (42, 48) via a pair of bearings (35, 36).
10. The storage system (1) according to any of the preceding clauses,
   wherein the container handling vehicle (42, 48) comprises a drive belt (11) for rotating the pulley (10), the drive belt being arranged within the width (W2) of the wheel assembly (30).
11. The storage system (1) according to any of the preceding clauses,
   wherein the container handling vehicle (42, 48) comprises a first set of wheels (30) and a second set of wheels (30),
   wherein at least one of the sets of wheels (30) can be lifted and lowered relative to the other set of wheels (30), so that the first set of wheels (30) and the second set of wheels (30) can be engaged with a respective set of rails (110, 111), and
   wherein at least one of the sets of wheels (30) comprises four wheel assemblies (30), two wheel assemblies (30) arranged on each of two opposite sides of the vehicle (42, 48).
12. The storage system (1) according to clause 11,
   wherein the pulleys (34) of two wheel assemblies (30) arranged on a common side of the vehicle (42, 48) are interconnected by a single belt (11).
13. The storage system (1) according to any of the preceding clauses,
   wherein each wheel (30) is formed by a wheel assembly (30).
14. The storage system (1) according to any of the preceding clauses,
   wherein the pulley (34) of the wheel assembly (30) is arranged axially further inwards than the outer wheel element (50).
15. The storage system (1) according to any of the preceding clauses,
   wherein the pulley (34) of the wheel assembly (47) is arranged further outwards than the outer wheel element (50).
16. A container handling vehicle (42, 48) for a storage system for storage containers,
   wherein the container handling vehicle (42, 48) comprises two sets of wheels by which the container handling vehicle (42, 48) may move in two perpendicular directions upon the rail grid of the storage system, at least one of the wheels (30) being formed by a wheel assembly (30),
   wherein the wheel assembly (30) comprises an outer wheel element (50) and a pulley (34) for a drive belt (11),
   wherein the wheel assembly (30) has a width (W2) in an axial direction being equal to or smaller than the width of a track of a of the rail grid, and
   wherein the wheel assembly (30) is arranged at an exterior side of a vehicle body (45).

### LIST OF REFERENCE NUMBERS

- 1: Prior art automated storage and retrieval system
- 2: Lifting frame, first type of lifting frame
- 3: Container connector, grippers
- 4: Guiding pin
- 5: Lifting bands
- 6: Vehicle body
- 7: Guiding pin recess
- 8: Wheel rim
- 9: Moulded tyre
- 10: Pulley
- 11: Drive belt
- 12: Sidewall
- 13: Connector recess
- 14: Sidewall of storage container
- 15: Lower bottom surface of lifting frame
- 16: Upper rim of storage container
- 17: Track
- 18: Track wall
- 30: Wheel assembly
- 31: Wheel rim
- 32: First axial section
- 33: Second axial section
- 34: Pulley
- 35: Bearing
- 36: Bearing
- 37: Inclined side portion
- 38: Wheel ring
- 39: Groove
- 40: Tooth / rib
- 41: Recess
- 42: Container handling vehicle
- 43: Vehicle body
- 44: Lateral side
- 45: Drive pulley
- 46: Deflection point
- 47: Wheel assembly
- 48: Vehicle
- 50: Outer wheel element
- 51: Wheel hub
- 100,100': First framework structure, second framework structure
- 102: Upright members of framework structure
- 103: Horizontal members of framework structure
- 104: Storage grid
- 105: Storage column
- 106: Storage container
- 106': Particular position of storage container
- 107: Stack
- 108: Rail system
- 110: Parallel rails in first direction (X)
- 110a: First rail in first direction (X)
- 110b: Second rail in first direction (X)
- 111: Parallel rail in second direction (*Y*)
- 111a: First rail of second direction (Y)
- 111b: Second rail of second direction (Y)
- 112: Access opening, storage column
- 113: Access opening, buffer column
- 119: First port column
- 120: Second port column
- 201: Prior art container handling vehicle
- 201a: Vehicle body of the container handling vehicle 201
- 201b: Drive means / wheel arrangement, first direction (*X*)
- 201c: Drive means / wheel arrangement, second direction (*Y*)
- 301: Prior art cantilever container handling vehicle
- 301a: Vehicle body of the container handling vehicle 301
- 301b: Drive means in first direction (*X*)
- 301C: Drive means in second direction (*Y*)
- 401: Prior art container handling vehicle
- 401a: Vehicle body of the container handling vehicle 401
- 401b: Drive means in first direction (*X*)
- 401c: Drive means in second direction (*Y*)
- X: First direction
- Y: Second direction
- Z: Third direction
- W1: Width of rail
- W2: Width of wheel assembly
- W3: Width of track
- W4: Width of outer wheel element

## Claims

1. A wheel assembly for a container handling vehicle including an outer wheel element (50) configured to be received in a track recess, and a pulley (34) for a drive belt (11) wherein the wheel assembly (30) has a width (W2) in an axial direction being equal to or smaller than the width (W3) of the track (17) of the track recess.

2. The wheel assembly (1) according to claim 1, wherein the outer wheel element (50) of the wheel assembly (30) comprises an inclined side portion (37) for guidance by a respective inclined portion of one of the track walls (18).

3. The wheel assembly (1) according to any of the preceding claims, wherein the outer wheel element (50) of the wheel assembly (30) comprises a wheel rim (8) and a tyre (9) arranged or moulded on the wheel rim (8), optionally wherein the wheel rim (8) and the pulley (10) are portions of a single wheel component, optionally
wherein the pulley (34) has teeth or ribs (40) that extend in an axial direction and are configured to partially engage with complementary grooves (39) in an inner circumference of a wheel ring (38) that forms the wheel rim (31),
wherein the pulley (34) has a width that corresponds to the width (W2) of the wheel assembly (30), and
wherein the wheel ring (38) has a width that corresponds to the width (W4) of the outer wheel element (50), optionally
wherein the wheel assembly (30) is mounted on a wheel hub (51) of the container handling vehicle (42, 48) via a pair of bearings (35, 36).

4. A container handling vehicle (42, 48) for a storage system for storage containers including the wheel assembly of any preceding claim.

5. The container handling vehicle of claim 4 comprising two sets of wheels by which the container handling vehicle (42, 48) may move in two perpendicular directions upon the rail grid of the storage system, at least one of the wheels (30) being formed by the wheel assembly (30),
wherein the wheel assembly (30) is arranged at an exterior side of a vehicle body (45).

6. The container handling vehicle according to claim 4 or 5,
wherein the container handling vehicle (42, 48) comprises a drive belt (11) for rotating the pulley (10), the drive belt being arranged within the width (W2) of the wheel assembly (30).

7. The container handling vehicle according to any of claims 4 to 6,
wherein the container handling vehicle (42, 48) comprises a first set of wheels (30) and a second set of wheels (30),
wherein at least one of the sets of wheels (30) can be lifted and lowered relative to the other set of wheels (30), so that the first set of wheels (30) and the second set of wheels (30) can be engaged with a respective set of rails (110, 111), and
wherein at least one of the sets of wheels (30) comprises four wheel assemblies (30), two wheel assemblies (30) arranged on each of two opposite sides of the vehicle (42, 48).

8. The container handling vehicle (1) according to claim 7,
wherein the pulleys (34) of two wheel assemblies (30) arranged on a common side of the vehicle (42, 48) are interconnected by a single belt (11) or
wherein each wheel (30) is formed by a wheel assembly (30).

9. The container handling vehicle according to any of claims 4 to 8, wherein the pulley (34) of the wheel assembly (30) is arranged axially further inwards than the outer wheel element (50), or
wherein the pulley (34) of the wheel assembly (47) is arranged further outwards than the outer wheel element (50).

10. A storage system (1) for storage containers (106), the storage system comprising a framework structure (100), and a container handling vehicle (42, 48) according to any of claims 4 to 9,
wherein the framework structure comprises a rail grid (108) having a first set of parallel rails (110) and a second set of parallel rails (111) arranged perpendicular to the first set of rails (110), and
wherein each rail (110,111) of the first set of rails has two sidewalls (12), outer edges of which defining a width (W1) of the rail, and comprises two parallel tracks (17), each track being for guiding a wheel (30) of the set of wheels (30).

11. The storage system according to claim 10,
wherein each track (17) is defined by two opposed track walls (18), which are arranged to define a path for a wheel (30) of a vehicle (42, 48) running along the track, and a maximum track width (W3) of the track, which is the largest gap width between the track walls (18), and
wherein the outer wheel element (50) of the wheel assembly (30) has a width (W4) being equal to or smaller than half the maximum track width (W3) of the track (17).

12. The storage system (1) according to claim 11 or 12, wherein the wheel assembly (30) does not extend in an axial direction beyond sidewalls (12) of the rail (110, 111) optionally wherein the rail grid (108) defines a plurality of access openings (112), and the wheel assembly (30) does not extend over an inner periphery of any of the access openings (112) when the container handling vehicle (42, 48) operates on the rail grid (108).
